(19) Europäisches Patentamt
European Patent Office
Office européen des brevets

(11) EP 3 769 825 A1

(12) EUROPEAN PATENT APPLICATION

(43) Date of publication:
27.01.2021 Bulletin 2021/04

(51) Int Cl.:
A63F 13/35 (2014.01)          A63F 13/67 (2014.01)
A63F 13/69 (2014.01)

(21) Application number: 19290063.7

(22) Date of filing: 26.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Thales
92400 Courbevoie (FR)

(72) Inventors:
• SEMET, Yann
91767 Palaiseau Cedex (FR)
• MARCON, Bruno
91767 Palaiseau Cedex (FR)

(74) Representative: Lavoix
2, place d'Estienne d'Orves
75441 Paris Cedex 09 (FR)

(54) COMPUTER-IMPLEMENTED METHOD FOR SIMULATING A REACTION MODEL AND ASSOCIATED DEVICES

(57) The invention concerns a method for simulating a reaction model, the reaction model simulating the reactions of players playing in a repeated way to a game, notably a serious game, the game evaluating the reactions of the players to at least one item provided by the game, the reactions being acquired by using an interrogator system (10) shared with other players, the method for simulating comprising:
- acquiring the previous reactions of the players, to obtain a collective reaction history,
- selecting the items to obtain sets of items, a set of items gathering the items provided by the game implying with the same level of difficulty an expected reaction, and
- obtaining the reaction model based on the selected sets of items and the collective reaction history.

FIG.1

Printed by Jouve, 75001 PARIS (FR)

**Description**

The present invention concerns a computer-implemented method for simulating a reaction model, the reaction model simulating the reactions of players playing to a game. The present invention also relates to an associated computer program product and to an associated computer readable medium. The invention further relates to an associated interrogator system of a game.

The invention concerns the field of exchanges of a human being with a computer system, in particular in the context of e-learning systems. In particular, the invention relates to so-called serious games which are computer-implemented. Such serious games aim to facilitate the assimilation of pedagogical content using playful mechanisms. This implies that a serious game can be construed as a technical system comprising at least one server, configured for processing technical data.

In this frame, there is a need for a method that enables to simulate the good reactions brought by a set of players to an item of the serious games and also to increase the number of good reactions provided by the set.

To this end, the present description describes a computer-implemented method for simulating a reaction model, notably for calibrating a method for determining a reward specific to a player, the reaction model simulating the reactions of players playing in a repeated way to a game, notably a serious game, the game evaluating the reactions of the players to at least one item provided by the game, the reactions being acquired by using an interrogator system shared with other players, the method for simulating comprising: acquiring the previous reactions of the players, to obtain a collective reaction history, selecting the items provided by the game to obtain sets of items, a set of items gathering the items provided by the game implying with the same level of difficulty an expected reaction, and obtaining the reaction model based on the selected sets of items and the collective reaction history.

According to particular embodiments, the method for simulating a reaction model includes one or more of the following features, taken in isolation or in all technically possible combinations:

- at the obtaining step, the reaction model comprises the initial reaction of the set of players to the at least one item.
- a reward is attributed to each player in function of his reactions and wherein, at the obtaining step, the reaction model is based on the rewards attributed to the players.
- the reaction model depends on the total rewards attributed to one player.
- at the obtaining step, a parameter used to obtain the reaction model is the sum of the initial response of the set of players to the at least one item and the number of rewards obtained by the set of players.
- at the obtaining step, a limiting constant is used, inversely proportional to action difficulty, to set an upper bound on simulated success probabilities.
- a desired number of expected reactions is provided for each item of the game and at the obtaining step, the reaction model is based on the desired numbers of expected reactions.
- an individual reaction profile is provided for each player and at the obtaining step, the reaction model is based on the individual reaction profiles.
- at the obtaining step, the reaction model depends on an mathematical function.
- at the obtaining step, the reaction model depends on an exponential function.
- at the obtaining step, the reaction model has a general form $x \rightarrow A + \frac{1}{1+e^{-Bx}}$, A and B being constants.

The present description also concerns a computer-implemented method for determining a reward specific to a player, the player playing in a repeated way to a game, notably a serious game, the game evaluating the reaction of the players to at least one item provided by the game, the reaction being acquired by using an interrogator system (10) shared with other players, a reward being attributed to the player in function of his reactions, the method for determining the reward comprising at least the following steps: acquiring the previous reactions of the player, to obtain a reaction history of the player, acquiring the previous reactions of other players, to obtain a collective reaction history, and completing the acquired collective reaction history by a set of reactions simulated by using the model obtained when carrying out the method as previously described, to obtain a completed collective reaction history, and determining the reward specific to the player in function of the reaction history of the player and of the completed collective reaction history.

The present description also relates to a computer-implemented method for determining a reward specific to a player, the player playing in a repeated way to a game, notably a serious game, the game evaluating the reactions of the players to at least one item provided by the game, the reactions being acquired by using an interrogator system shared with other players, a reward being attributed to the player in function of his reactions, the method for determining the reward comprising at least the following steps: acquiring the previous reactions of the player, to obtain a reaction history of the player, acquiring the previous reactions of other players, to obtain a collective reaction history, and determining the reward specific to the player in function of the reaction history of the player and of the collective reaction history.

According to particular embodiments, the method for determining a reward includes one or more of the following features, taken in isolation or in all technically possible combinations:

- at the determining step, an optimization criterion is used.
- the optimization criterion is one criterion or a combination of criteria chosen in the group consisting of : maximizing the value of probability of success of the player, a success being defined as the expected reactions, maximizing the value of probability of success of the whole set of players, the set of players being formed by the player and the other players, minimizing the number of games to be played by the player to obtain a predefined threshold of success to the game, minimizing the number of games to be played by the set of players to obtain a predetermined threshold of success to the game, and maximizing the minimum success probability over the set of rewardable actions, for all players
- at the determining step, a heuristic technique is used.
- the heuristic technique is an algorithm obtained by using a reinforcement learning technique.
- the heuristic technique is an ant colony algorithm.
- at the acquiring steps, the number of games acquired is superior or equal to 11.
- at the determining step, a total budget afforded to the reward of the game is taken into account.
- at the determining step, a corrective coefficient is used, the corrective coefficient providing more rewards to the players with a r probability of success inferior or equal to a predefined threshold.
- the method is carried out at each game.
- the interrogator system comprises a connected object.

Furthermore, the description relates to a computer program product comprising instructions for carrying out the steps of a method as previously described when said computer program product is executed on a suitable computer device.

In addition, the description relates to a computer readable medium having encoded thereon a computer program as previously described.

The description also refers to an interrogator system of a game, notably a serious game, played by a set of players, the game evaluating the reaction of the players to at least one item provided by the game, the reaction being acquired by using an interrogator system shared with other players, a reward being attributed to the player in function of his response, the interrogator system comprising a first acquisition sensor adapted to acquire the previous reactions of the player, to obtain a reaction history of the player, a second acquisition sensor adapted to acquire the previous reaction of other players, to obtain a collective reaction history, and a controller. The controller is adapted to select the items provided by the game to obtain sets of items, a set of items gathering the items provided by the game implying with the same level of difficulty an expected reaction, to obtain the response model based on the selected sets and the collective reaction history, to complete the acquired collective reaction history by a set of reactions simulated by using the reaction model, to obtain a completed collective reaction history, and to determine the reward specific to the player in function of the reaction history of the player and of the completed collective reaction history. In addition, the description also refers to an interrogator system of a game, notably a serious game, played by a set of players, the game evaluating the reactions of the players to at least one item provided by the game, the reactions being acquired by using the interrogator system shared with other players, a reward being attributed to the player in function of his reactions, the interrogator system comprising a first acquisition sensor adapted to acquire the previous reactions of the player, to obtain a reaction history of the player, a second acquisition sensor adapted to acquire the previous reactions of other players, to obtain a collective reaction history, and a controller adapted to determine the reward specific to the player in function of the reaction history of the player and of the collective reaction history.

According to a particular embodiment, the interrogator system comprises a plurality of entering modules specific to each player and a server connected to each entering modules.

Other features and advantages of the invention will be shown in the following description of the particular embodiments of the invention, given as examples only and with reference to the drawings which are:

- Figure 1, a schematic representation of an interrogator system, and
- Figure 2, a graph showing a reaction model of a simulated player in a set of players using the interrogator system of figure 1 to play to a game.

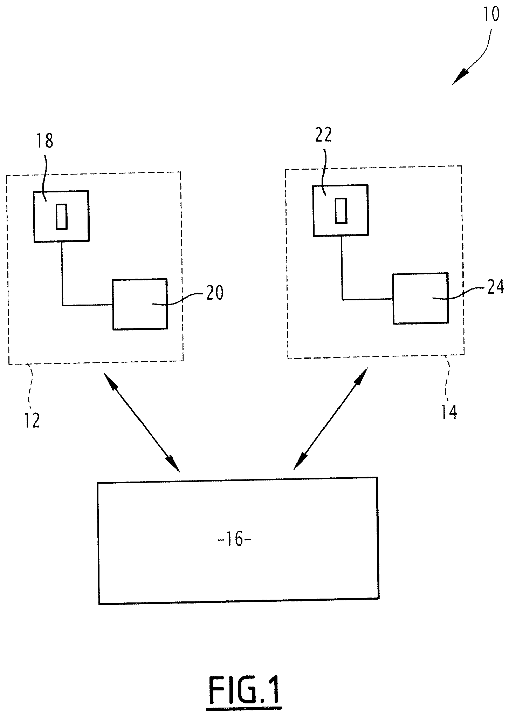

An interrogator system 10 is represented on figure 1.

The interrogator system 10 is an interrogator system of a game shared by a set of players playing to the game.

The set of players gathers any number of players, for instance at least 50 players, even at least 200 players.

The players are able to interact with the interrogator system 10 which is adapted to emit information, such as questions or rewards in a context of the game.

It is assumed that each player plays several times to the game. In this context, a game can be construed as a party which is to be distinguished from the game itself which gathers all the events that may happen to the set of players.

By "reward", it is understood any object or attribution that is desired by the player. The rewards create thus an incentive to continue the serious game. Rewards are, for example, points, additional virtual possibilities of development in the game or monetary incentives.

According to the described example, the game is a serious game.

A serious game or applied game is a game designed for a primary purpose other than pure entertainment. The "serious" adjective is generally prepended to refer to video games used by industries like defense, education, scientific exploration, health care, emergency management, city planning, engineering, and politics. Serious games share aspects with simulation.

The game is adapted to evaluate the reactions of the players to at least one item provided by the game.

By "reaction", it is understood a behavior of the player in the games. The reaction encompasses, for example, an answer to a question, a movement to another place, a decision to pursue a problem or not in the games. According to other examples, other reactions are possible.

In particular, the reaction comprises the behavior of the player in response to at least one item provided by the game.

The expression "item" designates an object, in particular a virtual object, which provides capabilities in the game to the player.

For example, an item is an additional function attributed to the player in the game, an additional tool or any other object which may be useful for the player. The player may appreciate the attribution of a specific item in function of factors specific to the player, such as his character, previously attributed items, his convictions and/or his or her cognitive capabilities.

The game also attributes the rewards to the player in function of his reactions.

As explained before, such rewards are any object or attribution that is desired by the player. The rewards create thus an incentive to continue the serious game.

Rewards are, for example, points or additional virtual possibilities of development in the serious game.

Other types of rewards are possible, such as bonuses or items to be used or enjoyed in the game's universe: characters, animals, buildings, currency and spells.

According to another embodiment, the game is controlled by an independent server which is adapted to interact with the interrogator system 10.

In the present case, it is supposed that the game is an ecologic game, that is a serious game devoted to teach the good reaction so as to respect ecologic imperatives.

The interrogator system 10 comprises a first acquisition sensor 12, a second acquisition sensor 14 and a controller 16.

The first acquisition sensor 12 is adapted to acquire the previous reactions of a specific player (simply named the player in what follows), to obtain a reaction history of the player.

According to the proposed example, the first acquisition sensor 12 is a connected object.

A connected object is an object which is able to communicate with other electronic devices such as a computer without using any physical link.

For instance, in this example, the connected object is a switch 18 controlling light.

The switch 18 and a memory 20 are part of the first acquisition sensor 12.

The first acquisition sensor 12 is adapted to record each time the player will interact with the switch 18.

Such first acquisition sensor 12 is, for instance, located in a private house.

The second acquisition sensor 14 is adapted to acquire the previous reactions of other players than the player, to obtain a collective reaction history.

Similarly, the second acquisition sensor 14 gathers a switch 22 and a memory 24.

In the proposed example, the second acquisition sensor 14 corresponds to a public location wherein several players can access to play.

For example, each acquisition sensor 14 is configured for acquiring the reactions of at least 11 previous games for the players so as to have statistically significant averages on that acquisition.

According to other examples, the interrogator system 10 comprises three or more than three acquisition sensors, for example one acquisition sensor for each player.

The controller 16 is adapted to determine the reward specific to the player in function of the reaction history of the player and of the collective reaction history.

The controller 16 is integrated into a computer.

In particular, the controller 16 is at least partially formed by software which is executable by a processor and stored in a computer memory.

Alternatively or in addition, the controller 16 is integrated, at least partially, into a physical device, such as a programmable logic circuit, such as an FPGA (which stands for "Field Programmable Gate Array"), or as a dedicated integrated circuit, such as an ASIC (which stands for "Application Specific Integrated Circuit").

The operation of the controller 16 will be better understood in reference to an example of carrying out a method for determining a reward specific to the player.

The method comprises a first step of acquiring, a second step of acquiring, a step of determining

The first step of acquiring is carried out by the first acquisition sensor 12.

In the first step of acquiring, the previous reactions of the player are acquired.

This enables to obtain the reaction history of the player.

The second step of acquiring is carried out by the second acquisition sensor 14.

In the second step of acquiring, the previous reactions of other players than the player himself are acquired.

This enables to obtain a collective reaction history.

For the merits of an example, in the following, a number of specific implementations of the acquiring steps are described.

During the first acquiring step, the first acquisition sensor 12 measures different reactions of a specific player. During the second acquiring step, the second acquisition sensor 14 measures the previous reactions of other players. The reactions of the specific player and/or of the other players comprise for example a content of an answer to a technical question of the serious game, an evaluation of the answer to the technical question (for example correct/incorrect or a grade), the time of response between the receipt of the question and the receipt of the answer and/or the quality and/or completeness of the answer. It can also be a specific behavior exhibited by the player, in the game or in the real world as sensed by connected objects, and an evaluation of the correctness of that behavior with respect to a predefined standard.

The first acquisition sensor 12 measures the answer or behavior by attributing a value in a given data format to the measured answer. For example, the first acquisition sensor 12 attributes a number of words/letters to the content of an answer to a technical question the serious game, a rating number or a binary number to the evaluation of the answer to the technical question, a time period in seconds to the time of response between the receipt of the question and the receipt of the answer and/or a rating number to the quality and/or completeness of the answer and/or a similarly quantified evaluation of a specific player behavior.

The second acquisition sensor 14 measures the answer by computing aggregated metrics on previous answers by other players, for example a mean value in a given data format to the measured answers or an average probability of success for a given behavior model. For example, the second acquisition sensor 14 attributes a mean number of words/letters to the content of an answer to a technical question in the serious game, a mean rating number or a binary number to the evaluation of the answer to the technical question, a mean time period in seconds to the time of response between the receipt of the question and the receipt of the answer and/or a mean rating number to the quality and/or completeness of the answer.

In the proposed example, at the acquiring steps, the number of games acquired is superior or equal to 11.

At the end of the acquiring steps, the reaction history of the player and the collective reaction history are known.

The step of determining is carried out by the controller 16.

At the step of determining, the reward specific to the player is determined in function of the reaction history of the player and of the collective reaction history.

In the described example, at the determining step, an optimization criterion is used.

For instance, the optimization criterion consists in maximizing the value of probability of success of the player, a success being defined as the expected reactions.

In another example, the optimization criterion consists in maximizing the value of probability of success of the whole set of players, the set of players being formed by the player and the other players.

According to another embodiment, the optimization criterion consists in minimizing the number of games to be played by the player to obtain a predefined threshold of success to the game.

In another embodiment, the optimization criterion consists in minimizing the number of games to be played by the set of players to obtain a predetermined threshold of success to the game.

In another example, the optimization criterion consists in maximizing the minimum success probability for all players over the set of possible rewardable actions.

When technically possible, the optimization criterion consists in using two or more of the previous above-mentioned criteria.

The optimization criterion is, for instance, used in a heuristic or meta-heuristic technique.

In the described example, the heuristic technique is an algorithm obtained by using a reinforcement learning technique.

In particular, the heuristic algorithm is an ant colony algorithm.

As a specific example, the controller 16 uses the following definitions in order to determine a reward value $R(a, i, t)$, with player a, action i and time step t.

An action success rate *ASR(i)* is defined as:

$$ASR(i) = \frac{\sum_{a,t} success}{\sum_{a,t} trials}$$

An action failure proportion *AFP(i)* is defined as:

$$AFP(i) = \frac{(1 - SR(i))^{\alpha}}{\sum_{j \neq i}(1 - SR(j))^{\alpha}}$$

where $\alpha$ is a positive real number

**[0079]** A player success rate *PSR(a)* is defined as:

$$PSR(a) = \frac{\sum_{i,t} success}{\sum_{i,t} trials}$$

A player failure proportion *PFP(a)* is defined as:

$$PFP(a) = \frac{(1 - SR(a))^{\beta}}{\sum_{b \neq a}(1 - SR(b))^{\beta}}$$

where $\beta$ is a positive real number.

Furthermore, a daily budget *DB* of rewards for all players is defined. $U_t$ is defined as the unspent budget at time t.

A reward portion *RP(a, i, t)* is defined as:

$$RP(a,i,t) = (DB + U_{t-1}) \cdot AFP(i)^{\alpha} \cdot PFP(a)^{\beta}$$

Finally, a wealth factor *WF(a, i, t)* is defined as:

$$WF(a,i,t) = \frac{1}{2} + (1 - \sigma\left(P_{a,i} + T_{a,i}, \frac{1}{2}\right))$$

The controller 16 determines, in particular, the reward value *R(a, i, t)* according to the following equation:

$$R(a,i,t) = WF(a,i,t) \cdot RP(a,i,t)$$

The reward value *R(a, i, t)* corresponds to the optimum reward value that is to be attributed in response to an action a of a player i. The final reward value is "optimum" in the way that it respects the factors cited in the above definitions.

For example, the reward value respects the daily budget *DB* and is specific to the player, depending on the reaction history of this player.

The computer-implemented method is, in particular, carried out at each game.

In other embodiment, the method is carried out at each time a reward is afforded to the player.

For example, if the player answers a question correctly, he receives a specific type or number of rewards with a value corresponding to the final reward value *R(a, i, t)*.

This method for determining therefore enables to obtain dynamic rewards.

By contrast, in the documents of the prior art, in order to stimulate the will of success of the players playing the serious game, predefined and static rewards are allocated to each player. In particular, each player obtains statically predefined rewards during the serious game, for example upon successful completion of a test or exercise.

The attribution of dynamic rewards enables to avoid that the best players be too easily rewarded and not stimulated while the less good players are not discouraged and continues playing the serious game.

Thus, the method for determining a reward specific to each player of the serious game augments the incentive to continue the game for each individual player.

This results in an increase of the number of good reactions provided by the set.

It should be emphasized that the method for determining is compatible with different ways of playing to the game. In the current example, the method for determining is used both in private and public contexts without any specific difficulty.

To increase such dynamic aspect of the method for determining, the method is carried out at each game.

The method for determining can also be rendered more accurate by using at least one of the following parameters.

According to an example, at the determining step, a total budget afforded to the reward of the game is taken into account.

In another example, at the determining step, a corrective coefficient is used, the corrective coefficient providing more rewards to the players with a probability of success inferior or equal to a predefined threshold.

This means that using such corrective coefficient corresponds to apply a function dynamically providing more rewards to the players with a lower probability of success.

In another embodiment, the interrogator system 10 comprises a plurality of entering modules specific to each player and a server connected to each entering modules.

For instance, the entering modules are keyboards and the server is used as a collective memory shared by each entering module. The server usually belongs to the provider of the game.

According to a preferred embodiment, the method for determining a reward is calibrated by using a method for simulating a reaction model which is now described.

A reaction model is simulating the reactions of players playing in a repeated way to the game.

Such method for simulating is carried out by using the interrogator system 10 of figure 1.

The method for simulating comprises a step of acquiring, a step of selecting and a step of obtaining.

The step of acquiring of the method for simulating is similar to the second step of acquiring of the method for determining. The remarks relative to the second step of acquiring therefore do apply here and are not repeated.

A collective reaction history is thus obtained.

For instance, the step of selecting is carried out by the controller 16.

At the step of selecting, items provided by the game are selected to form sets of items.

By definition, a set of items gather the items provided by the game implying with the same level of difficulty an expected reaction.

In other words, a specific set of items is a group of items that is expected to imply the same reaction of a player 12, at a specific level of difficulty of a question or decision context in the game.

The obtaining step is carried out by the controller 16.

At the obtaining step, the reaction model is obtained based on the selected sets of items and the collective reaction history.

The obtaining step is taking into account a plurality of parameters which are now described, bearing in mind that in other embodiments, only some of the described parameters are taken into accounts.

In the specific example which is described, at the obtaining step, the reaction model is based on the initial reaction of the set of players to the at least one item.

The reaction model is further based on the rewards attributed to the players.

The reaction model also depends on the total rewards attributed to one player.

Furthermore, in the described example, a parameter used to obtain the reaction model is the sum of the initial response of the set of players to the at least one item and the number of rewards obtained by the set of players.

A limiting constant is also used to prevent simulated success probabilities to reach unrealistically high values:

$$\max(P\_success) = \delta \mathrm{Di}$$

Where:

- $\delta$ is an adjustment constant empirically set to 0.1, and
- $D_i$ represents the intrinsic difficulty of an action i.

In addition, at the obtaining step, the reaction model is based on the desired numbers of expected reactions, the desired number of expected reactions being provided for each item of the game.

An individual reaction profile is also provided for each player and at the determining obtaining step, the reaction model is based on the individual reaction profiles.

This results in a reaction model depending on an exponential function.

More precisely, the reaction model has a general form $\chi \rightarrow A + \frac{1}{1+e^{-Bx}}$, A and B being constants.

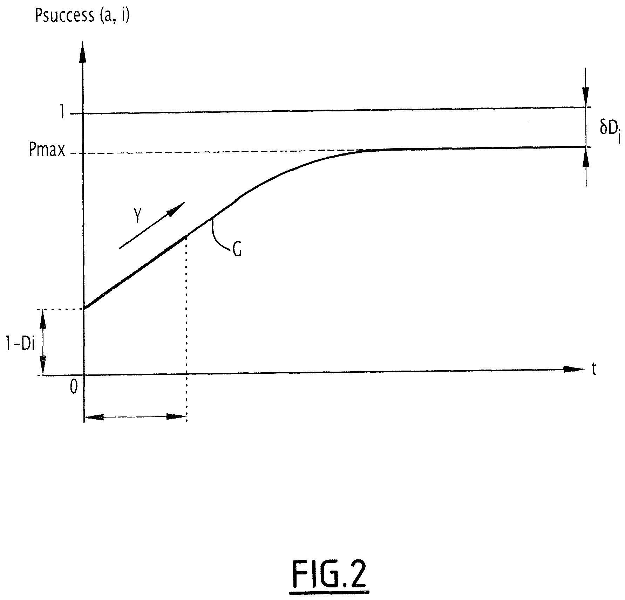

In the described example, the reaction model corresponds to the graph represented in figure 2 and is defined as follows :

$$\begin{cases} P_{success}(a,i,t) = (1 - D_i) + \sigma(P_{a,i} + T_{a,i,t}, \delta D_i, \gamma) \\ \sigma(x, \gamma, Amp) = 2Amp * \left(-\frac{1}{2} + \frac{1}{1 + e^{-\gamma x}}\right) \end{cases}$$

with :

- a: player;
- i: action;
- t: time step;
- $D_i$: intrinsic difficulty of an action i;
- $P_{a,i}$: intrinsic propensity of the player a for action i;
- $T_{a,i,t}$: accumulated rewards by player a for action i from 0 to t;
- $\delta$ boundary factor;
- $\gamma$: constant, and
- Amp: target amplitude.

The success $P_{success}$ of the player a is a function of characteristics of the player a and of the completed actions i. The success $P_{success}$ corresponds to the reaction of the player a, as simulated by the reaction model of the reaction model module.

The success $P_{success}$ of the player a presents a maximum value $P_{max}$ which corresponds to 100% (corresponding to $P_{success}$ = 1 in the graph of figure 2) minus a boundary distance $\delta \cdot$ Di. The boundary distance implies that the simulated success $P_{success}$ of the player a is susceptible to never attain the value of 100%.

As shown in figure 2, the minimum value of success $P_{success}$ corresponds to 1-Di with Di being the intrinsic difficulty of an action i. For example, if a question or problem is difficult, the intrinsic difficulty may be 0,9. The minimum success may then be 1 - 0,9 = 0,1. In a first portion of the graph G of figure 2, the success $P_{success}$ is susceptible to raise constantly according to the constant $\gamma$. In a second portion of graph G, the success $P_{success}$ is susceptible to raise logarithmically, with a threshold at $P_{max}$.

The shown reaction model models or simulates the behavior of a specific player a by taking into account both two elements. The first element is the natural propensity to perform behaviors as expected ($P_{a,i}$), incarnated by a default offset on the x-axis. The second element is the amount of rewards received so far for that particular action, incarnated by a second offset on the x-axis which fuels the variations of the success probability.

The second offset is dynamical because rewards come and go: naturally, they come when players are successful but they also fade away progressively thanks to an evaporation mechanism that represents the decreasing character of the psychological impact rewards have on players over time.

Such method for simulating can be used for calibrating the method for determining.

For instance, the method for simulating is used in a completing step between the second step of the method for determining and the step of determining the reward specific to the player.

In such example, the method for determining further comprises a step of completing the acquired collective reaction history by a set of reactions simulated by using the model obtained when carrying out the method for simulating, to obtain a completed collective reaction history.

The step of determining is the reward specific to the player in function of the reaction history of the player and of the collective reaction history.

This enables to obtain a more accurate determination of the reward attributed to the player.

**Claims**

1. A computer-implemented method for simulating a reaction model, notably for calibrating a method for determining a reward specific to a player, the reaction model simulating the reactions of players playing in a repeated way to a game, notably a serious game, the game evaluating the reactions of the players to at least one item provided by the game, the reactions being acquired by using an interrogator system (10) shared with other players, the method for simulating comprising:

- acquiring the previous reactions of the players, to obtain a collective reaction history,
- selecting the items provided by the game to obtain sets of items, a set of items gathering the items provided by the game implying with the same level of difficulty an expected reaction, and
- obtaining the reaction model based on the selected sets of items and the collective reaction history.

2. The method for simulating according to claim 1, wherein at the obtaining step, the reaction model comprises the initial reaction of the set of players to the at least one item.

3. The method for simulating according to claim 1 or 2, wherein, a reward is attributed to each player in function of his reactions and wherein, at the obtaining step, the reaction model is based on the rewards attributed to the players.

4. The method for simulating according to claim 3, wherein, the reaction model depends on the total rewards attributed to one player.

5. The method for simulating according to claims 2 and 4, wherein, at the obtaining step, a parameter used to obtain the reaction model is the sum of the initial response of the set of players to the at least one item and the number of rewards obtained by the set of players.

6. The method for simulating according to any one of the claims 1 to 5, wherein, at the obtaining step, a limiting constant is inversely proportional to the level difficulty of an expected reaction.

7. The method for simulating according to any one of the claims 1 to 6, wherein, a desired number of expected reactions is provided for each item of the game and at the obtaining step, the reaction model is based on the desired numbers of expected reactions.

8. The method for simulating according to any one of the claims 1 to 7, wherein, an individual reaction profile is provided for each player and at the obtaining step, the reaction model is based on the individual reaction profiles.

9. The method for simulating according to any one of the claims 1 to 8, wherein, at the obtaining step, the reaction model depends on an exponential function.

10. The method for simulating according to any one of the claims 1 to 9, wherein, at the obtaining step, the reaction model has a general form $x \rightarrow A + \frac{1}{1+e^{-Bx}}$, A and B being constants.

11. A computer-implemented method for determining a reward specific to a player, the player playing in a repeated way to a game, notably a serious game, the game evaluating the reaction of the players to at least one item provided by the game, the reaction being acquired by using an interrogator system (10) shared with other players, a reward being attributed to the player in function of his reactions, the method for determining the reward comprising at least the following steps:

- acquiring the previous reactions of the player, to obtain a reaction history of the player,
- acquiring the previous reactions of other players, to obtain a collective reaction history, and
- completing the acquired collective reaction history by a set of reactions simulated by using the model obtained when carrying out the method of any one of the claims 1 to 10, to obtain a completed collective reaction history, and
- determining the reward specific to the player in function of the reaction history of the player and of the completed collective reaction history.

12. A computer program product comprising instructions for carrying out the steps of a method according to any one of claims 1 to 11 when said computer program product is executed on a suitable computer device.

13. A computer readable medium having encoded thereon a computer program according to claim 12.

14. An interrogator system (10) of a game, notably a serious game, played by a set of players, the game evaluating the reaction of the players to at least one item provided by the game, the reaction being acquired by using an interrogator system (10) shared with other players, a reward being attributed to the player in function of his response, the interrogator system (10) comprising:

- a first acquisition sensor (12) adapted to acquire the previous reactions of the player, to obtain a reaction history of the player,
- a second acquisition sensor (14) adapted to acquire the previous reaction of other players, to obtain a collective reaction history, and
- a controller (16) adapted to:

- select the items provided by the game to obtain sets of items, a set of items gathering the items provided by the game implying with the same level of difficulty an expected reaction,
- obtain the response model based on the selected sets and the collective reaction history,
- complete the acquired collective reaction history by a set of reactions simulated by using the reaction model, to obtain a completed collective reaction history, and
- determine the reward specific to the player (12) in function of the reaction history of the player and of the completed collective reaction history.

15. Interrogator system according to claim 14, wherein the interrogator system (10) comprises a plurality of entering modules specific to each player and a server connected to each entering module.

FIG.1

FIG.2

Europäisches
Patentamt

European
Patent Office

Office européen
des brevets

# EUROPEAN SEARCH REPORT

Application Number

EP 19 29 0063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/147491 A1 (LOWERY PARKER E [US] ET AL) 31 May 2018 (2018-05-31) * paragraph [0038] * * paragraph [0002] - paragraph [0005] * * claim 1 * ----- | 1-15 | INV. A63F13/35 A63F13/67 A63F13/69 |
| X | US 2017/148271 A1 (GRABOYES GOLDMAN BLAINE JOSHUA [US] ET AL) 25 May 2017 (2017-05-25) * paragraph [0004] - paragraph [0006] * * paragraph [0012] * * paragraph [0013] * ----- | 1-15 | |
| X | US 2009/061991 A1 (POPOVICH ALEXANDER [US] ET AL) 5 March 2009 (2009-03-05) * paragraph [0012] - paragraph [0013] * * paragraph [0014] * * paragraph [0041] * * paragraph [0076] * ----- | 1-15 | |

TECHNICAL FIELDS
SEARCHED       (IPC)

A63F

The present search report has been drawn up for all claims

| Place of search | Date of completion of the search | Examiner |
|---|---|---|
| The Hague | 16 March 2020 | Mikulastik, Patrick |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

 .........................................................................................................

& : member of the same patent family, corresponding
      document

EPO FORM 1503 03.82 (P04C01)

**ANNEX TO THE EUROPEAN SEARCH REPORT
ON EUROPEAN PATENT APPLICATION NO.**

EP 19 29 0063

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2020

| Patent document cited in search report | | Publication date | Patent family member(s) | | Publication date |
|---|---|---|---|---|---|
| US 2018147491 | A1 | 31-05-2018 | NONE | | |
| US 2017148271 | A1 | 25-05-2017 | AU | 2016263434 A1 | 18-01-2018 |
| | | | CN | 107667393 A | 06-02-2018 |
| | | | EP | 3298596 A1 | 28-03-2018 |
| | | | TW | 201703826 A | 01-02-2017 |
| | | | US | 2016343211 A1 | 24-11-2016 |
| | | | US | 2017148271 A1 | 25-05-2017 |
| | | | WO | 2016187138 A1 | 24-11-2016 |
| US 2009061991 | A1 | 05-03-2009 | AU | 2008296581 A1 | 12-03-2009 |
| | | | GB | 2462238 A | 03-02-2010 |
| | | | US | 2009061991 A1 | 05-03-2009 |
| | | | US | 2009061997 A1 | 05-03-2009 |
| | | | US | 2009061998 A1 | 05-03-2009 |
| | | | US | 2009061999 A1 | 05-03-2009 |
| | | | WO | 2009032607 A1 | 12-03-2009 |

EPO FORM P0459

For more details about this annex : see Official Journal of the European Patent Office, No. 12/82